# EUROPÄISCHE PATENTSCHRIFT

(11) **EP 3 429 448 B1**
(45) Veröffentlichungstag und Bekanntmachung des Hinweises auf die Patenterteilung: **16.11.2022**
(21) Anmeldenummer: 17712094.6
(22) Anmeldetag: 17.03.2017
(51) Int. Cl.: A47K 13/02

(54) **WC-SITZGARNITUR, URINAL-DECKEL, VERFAHREN ZU DEREN FERTIGUNG**
TOILET SEAT FITTING, URINAL COVER AND METHOD FOR MANUFACTURING SAME
GARNITURE DE SIÈGE DE W.-C., COUVERCLE D'URINOIR ET PROCÉDÉ DE FABRICATION ASSOCIÉ

(30) Priorität: 17.03.2016 DE 102016104998; 04.07.2016 DE 102016112210; 10.03.2017 DE 102017105204
(43) Veröffentlichungstag der Anmeldung: 23.01.2019
(73) Patentinhaber: Hamberger Industriewerke GmbH, 83071 Stephanskirchen (DE)
(72) Erfinder: SCHWAIGHOFER, Ralf, 83115 Neubeuern (DE); GÜNTHER, Grischa, 83080 Oberaudorf (DE); HELLAUER, Erich, 83059 Kolbermoor (DE)
(74) Vertreter: Winter, Brandl - Partnerschaft mbB
(86) Internationale Anmeldenummer: PCT/EP2017/056467
(87) Internationale Veröffentlichungsnummer: WO 2017/158196

(56) Entgegenhaltungen:
- WO-A1-99/62392
- WO-A2-2013/189469
- CN-A- 101 361 640
- JP-A- H10 234 621
- Beewill: "slim toilet seat,duroplast toilet seat,elongated toilet seat cover", , 26. Februar 2016 (2016-02-26), Seiten 1-1, XP055375150, Gefunden im Internet: URL:http://www.toiletseatmanufacturer.com/ products_info/duroplast-high-quality-slim- elongated-toilet-seat-305969.html [gefunden am 2017-05-22]

## Beschreibung

Die Erfindung betrifft eine WC-Sitzgarnitur mit einem WC-Sitz und einem WC-Deckel gemäß Patentanspruch 1, sowie ein Verfahren zu deren Fertigung gemäß Patentanspruch 3.

Wie beispielsweise in der EP 1 199 020 B1 der Anmelderin beschrieben, besteht eine derartige WC-Sitzgarnitur im Prinzip aus einem WC-Sitz und einem WC-Deckel, die über eine WC-Sitzgelenkanordnung gelenkig miteinander verbunden sind und an einer Keramik befestigbar sind.

Hochwertige WC-Sitzgarnituren werden häufig aus UREA im Pressverfahren hergestellt. UREA hat den Vorteil einer sehr hohen Festigkeit, Steifigkeit und Kratzfestigkeit, wobei auch die Chemikalienbeständigkeit deutlich höher als bei thermoplastischen WC-Sitzgarnituren ist. Das UREA ist neben den Farbpigmenten noch mit einem Anteil an Füllstoff, beispielsweise bis zu 35 Volumenprozente Zellulose ausgerüstet.

Seit einigen Jahren zeichnet sich ein Designtrend dahingehend ab, dass die Keramik und auch die damit verbundenen WC-Sitzgarnituren in einem Design ausgebildet werden, das flache WC-Sitze und WC-Deckel mit einem parallel verlaufenden Spalt jeweils zwischen Sitz und Deckel und zwischen Sitz und Keramik voraussetzt. Dieses "Flat-Design" stellt jedoch erhöhte Anforderungen an die Formbeständigkeit von Sitz und Deckel, um den umlaufenden Sichtspalt auf dem gewünschten Spaltmaß zu halten. Es zeigte sich beim Einsatz herkömmlicher WC-Sitzgarnituren, dass insbesondere der Deckel etwas eingewölbt wird (Durchfallen des Deckels), so dass die Ränder und Ecken des Deckels hochgezogen werden und somit der Deckel "schüsselt".

Diese unerwünschte Deformation beruht im Prinzip darauf, dass das Material, insbesondere der Füllstoff Wasser aufnimmt und dann entsprechend quillt. Aufgrund der flachen Ausgestaltung von Sitz- und Deckel kann die beim Quellen entstehende Spannung nicht durch eine Eigensteifigkeit abgefangen werden, die aus der Geometrie des Sitzes/Deckels entsteht, so dass diese aus dem Quellen resultierende Spannung zu einem Verzug führt.

Bei herkömmlichen WC-Sitzgarnituren mit verrundeter Geometrie und relativ starken konkaven und konvexen Bereichen spielt eine derartige Verformung im Millimeterbereich keine Rolle, da bei derartigen Designs zum einen das Spaltmaß größer ist und zum anderen die verrundete, dreidimensional gewölbte Form eine hohe Eigensteifigkeit aufweist und daher derartigen Verformungen, wie beispielsweise einer Unterwölbung entgegenwirkt.

Aus der JP 2012-050683 A ist es per se bekannt, WC-Sitzgarnituren im BMCoder SMC-Verfahren herzustellen - diese Verfahren werden jedoch nicht zur Lösung der vorstehend erläuterten Problematik angewendet.

Das Dokument GB2482500 offenbart ein Verfahren zur integralen Herstellung eines Toilettensitzes mit einem eingebetteten Heizdraht. Bei dem Verfahren wird ein Kunststoffmaterial oder glasfaserverstärkter Kunststoff verwendet, um einen Heizdraht in einen Toilettensitz einzubetten.

Das Anbringen von Montageteilen, wie beispielsweise Elementen der WC-Sitzgelenkanordnung an derartige duroplastische WC-Sitzgarnituren ist sehr aufwendig. Die Anbindung erfolgt nachträglich durch Bohren, Einkleben oder Direktverschrauben. Die Krafteinleitung und Kraftübertragung sind dabei stark eingeschränkt durch das spröde und extrem kerbempfindliche Grundmaterial (UF-Formmasse).

Dem gegenüber liegt der Erfindung die Aufgabe zugrunde, eine WC-Sitzgarnitur zu schaffen, bei der auch bei einem "Flat-Design" eine unerwünschte Deformation im Gebrauch verhindert ist.

Diese Aufgabe wird durch eine WC-Sitzgarnitur oder einen Urinal-Deckel mit den Merkmalen des Patentanspruchs 1 und ein Verfahren gemäß Patentanspruch 3 gelöst.

Der Erfindung liegt des Weiteren die Aufgabe zugrunde, eine WC-Sitzgarnitur oder einen Urinal-Deckel bzw. ein Verfahren zum Herstellen einer derartigen WC-Sitzgarnitur bzw. eines derartigen Urinal-Deckels zu schaffen, wobei eine Herstellung mit verringertem Aufwand ermöglicht sein soll.

Diese Aufgabe wird im Hinblick auf die WC-Sitzgarnitur durch die Merkmale des Patentanspruches 3 gelöst.

Vorteilhafte Weiterbildungen der Erfindung sind Gegenstand der Unteransprüche.

Die erfindungsgemäße WC-Sitzgarnitur hat gemäß einem ersten Aspekt einen WC-Sitz und einen WC-Deckel, die über eine WC-Sitzgelenkanordnung miteinander verbunden sind. Der Sitz und der Deckel sind dabei im "Flat-Design" ausgeführt, wobei im aufeinanderliegenden Zustand der beiden, insbesondere zwischen ihnen, ein Randspalt oder Sichtspalt von weniger als 10 mm zwischen WC-Sitz und WC-Deckel, vorzugsweise ein Randspalt im Bereich zwischen 3 und 7 mm vorgesehen ist, der insbesondere von lateral außen sichtbar ist. Auch der Randspalt oder Sichtspalt zwischen der Keramik und dem WC-Sitz kann etwa in diesem Wertebereich ausgebildet sein. Erfindungsgemäß sind der WC-Sitz und der WC-Deckel nach dem SMC- (Sheet-Molding-Compound) oder BMC- (Bulk-Molding-Compound) Verfahren hergestellt. Der auf diese Weise hergestellte WC-Sitz und der WC-Deckel weist somit eine duroplastische Harzmatrix mit einer Faserverstärkung auf.

Durch die Faserverstärkung und die beim SMC-/BMC-Verfahren verwendete duroplastische Harzmatrix wird eine äußerst formsteife Struktur mit minimaler oder keiner Wasseraufnahme bereitgestellt, so dass auch bei ungünstigen Einsatzbedingungen mit hoher Luftfeuchtigkeit kein Verzug des jeweiligen Bauteils (Sitz und Deckel) zu befürchten ist.

Die minimale oder entfallende Wasseraufnahme ist dadurch ermöglicht, dass im Rahmen des SMC-/BMC-Verfahrens nahezu oder vollständig zellulosefrei gearbeitet wird. Der so hergestellte WC-Sitz und der WC-Deckel weisen, anders als beispielsweise UREA- Produkte (bis zu 35% Zellulose), nahezu keine Zellulose als Füllstoff auf oder sind vollständig zellulosefrei.

Gemäß einem Aspekt der erfindungsgemäßen WC-Sitzgarnitur bestehen der WC-Deckel und der WC-Sitz aus faserverstärktem Kunststoff, bestehend aus einer duroplastischen Harzmatrix mit Verstärkungsfasern.

Derartige faserverstärkte Materialien mit duroplastischer Harzmatrix sind zwar wesentlich teurer als die herkömmlicher Weise verwendeten Kunststoffe - dieser Nachteil wird jedoch durch die hohe Formsteifigkeit kompensiert. Daher ist gegenüber herkömmlichen Materialien, wie beispielsweise UREA, eine geringere Wandstärke des WC-Sitzes und/oder des WC-Deckels ermöglicht. Dies spart wiederum Material ein.

Bei der erfindungsgemäßen WC-Sitzgarnitur können dabei der WC-Sitz und / oder der WC-Deckel aus vorgefertigten SMC-Halbzeugzuschnitten, wie beispielsweise einem Vlies oder einer Fasermatte oder dergleichen bestehen, oder aber der WC-Sitz und / oder der WC-Deckel besteht aus kurzen Fasern, in sogenannter Bulk-Form (BMC-Verfahren). Die verstärkend wirksamen Fasern können organisch oder anorganisch sein. Für die Kunstharz- oder Kunststoffmatrix kommen in beiden Fällen geeignete duroplastische Materialien, wie beispielsweise Polyester- oder Vinylesterharze in Frage.

Erfindungsgemäß sind der WC-Sitz und der WC-Deckel - in SMC- bzw. BMC-Vollmaterial ausgestalltet. Vollmaterial bedeutet in diesem Zusammenhang, dass auf zusätzliche Einlagen wie beispielsweise Kunststoff- oder Holzlagen zur Formgebung oder Versteifung verzichtet ist. Das vereinfacht die SMC- / BMC-Fertigung, da keine zusätzliche Einlage ins Press- oder Spritzgießwerkzeug einzulegen ist.

Unabhängig davon können natürlich Einlegteile, wie weiter unten noch erläutert wird, die insbesondere zur Befestigung oder Lagerung des WC-Sitzes und / oder Deckels dienen, im Zuge der Fertigung beim Pressen oder Spritzgießen vorgesehen sein.

Beim SMC-Verfahren werden die vorzugsweise aus Glasfasermatten bestehenden, mit dem Reaktionsharz (Kunstharz) versetzen Halbzeuge in ein erwärmtes Presswerkzeug eingelegt und dann bei hohem Druck verpresst. Dabei sind die Halbzeuge vorzugsweise mit entsprechenden Farbpigmenten versehen. Das resultierende Bauteil zeichnet sich durch eine sehr gute Oberflächenqualität bei extrem hoher Eigensteifigkeit, Festigkeit und Zähigkeit und geringer Wasseraufnahme aus.

Beim BMC-Verfahren werden die Kunststofffasern und die Matrix als formlose Masse, insbesondere über einen Stopfer oder einen Schneckeneinzug, in die Pressform eingebracht, genauer gesagt eingespritzt. Die mit dem BMC-Verfahren gefertigte WC-Sitzgarnitur weist ebenfalls eine hohe Festigkeit und gegenüber der SMC-Variante zudem eine verbesserte thermische Resistenz auf.

In einer vorteilhaften Weiterbildung des BMC-Verfahrens wird vor dem Spritzen wenigstens ein Einlegeteil, beispielsweise ein Scharnierelement eines WC-Sitzgelenks, in der Kavität des Spritzgießwerkzeugs angeordnet. Der so gefertigte WC-Sitz und / oder WC-Deckel weist das Einlegeteil dann als umspritzte, das heißt fest in die Matrix eingebundene, Komponente auf.

Auch im mit dem SMC-Verfahren gefertigten WC-Sitz und / oder WC-Deckel kann wenigstens ein derartiges Einlegeteil vorgesehen sein.

Unabhängig von der gewählten Variante des Verfahrens (SMC oder BMC) weist der so hergestellte WC-Sitz oder WC-Deckel gegenüber einem herkömmlich gefertigten eine höhere Festigkeit auf. Vorteilhaft ist auch, dass der zum Einsatz kommende Kunststoff - insbesondere die faserverstärkte duroplastische Harzmatrix - eine verglichen mit UREA bedeutend geringere Neigung zu Spannungsrissen aufweist.

Ein erfindungsgemäßes Fertigungsverfahren zur Herstellung einer WC-Sitzgarnitur, die gemäß einem der Aspekte der vorhergehenden Beschreibung ausgestaltet ist, weist wenigstens einen der beiden folgenden Schritte auf: Verpressen einer mit einem SMC-Halbzeug versetzten Kunststoffmatrix oder Spritzen einer mit einem BMC-Halbzeug versetzten Kunststoffmatrix zu wenigstens einem Abschnitt einer WC-Sitzgarnitur. Der wenigstens eine Abschnitt ist dabei beispielsweise der WC-Sitz oder der WC-Deckel.

Das Verpressen erfolgt vorzugsweise bei einer Temperatur von etwa 130 bis 170°C, insbesondere zwischen 140 und 160°C.

Ein Druck beim Verpressen ist vorzugsweise zwischen etwa 75 und 105 bar, insbesondere zwischen 80 und 100 bar.

Die erfindungsgemäße WC-Sitzgarnitur ist besonders gut für Geometrien geeignet, bei denen der Deckel und der Sitz flach, ohne nennenswerte Aufwölbung oder Wölbung ausgeführt sind.

Die WC-Sitzgarnitur kann dann allerdings im Bereich der WC-Gelenkanordnung aufgewinkelt sein, um für diesen Raum zu schaffen.

Gemäß einer Weiterbildung der WC-Sitzgarnitur ist oder sind der WC-Deckel und / oder der WC-Sitz im Bereich der WC-Sitzgelenkanordnung angewinkelt oder gewölbt.

In einer Weiterbildung der WC-Sitzgarnitur ist im WC-Sitz und / oder im WC-Deckel wenigstens ein Einlegeteil verpresst oder umspritzt.

In einer Weiterbildung dazu ist dieses Einlegeteil ein Abschnitt der WC-Sitzgelenkanordnung oder eines WC-Sitzgelenkes oder ein Abschnitt zur teilweisen Aufnahme der WC-Sitzgelenkanordnung oder des WC-Sitzgelenks.

Das Einlegeteil kann beispielsweise ein Abschnitt zur Verbindung der WC-Sitzgelenkanordnung mit dem WC-Deckel oder dem WC-Sitz sein.

Insbesondere ist das Einlegeteil eine Aufnahme, in der eine Achse, insbesondere die eines Dämpfungskolbens eines Drehdämpfers eines WC-Sitzgelenks der WC-Sitzgelenkanordnung, zumindest abschnittsweise aufgenommen ist. Beispielsweise ist es hülsenförmig ausgebildet. Beispielsweise kann das Einlegeteil aus Stahl oder Aluminium ausgeführt sein. Auch kann es als Insert mit Innengewinde (Spreadsert / Expansionsert), mit oder ohne aufspreizbare Außenflanken, ausgebildet sein.

Die erfindungsgemäße WC-Sitzgarnitur hat gemäß einem zweiten Aspekt einen Sitz und einen Deckel, die mittels einer Gelenkanordnung gelenkig mit einander verbunden sind. Eine derartige WC-Sitzgarnitur ist ausgelegt, um an eine Keramik angesetzt zu werden. Ein anderer Aspekt, der nicht Teil der Erfindung ist, betrifft auch einen Urinal-Deckel zum Abdecken eines Urinals. Der Sitz oder der Deckel, beispielsweise auch der Urinal-Deckel sind aus einer Formmasse hergestellt, die im Prinzip aus einer faserverstärkten Harz- oder Thermoplastmatrix gebildet ist, die in ein entsprechendes Werkzeug eingebracht wird, in dem die Formgebung erfolgt. Gemäß einer Variante wird vor dem Verpressen in die Matrix ein Einlegeteil eingebracht, so dass dieses im Wesentlichen innerhalb der Formmasse vorfixiert ist.

Gemäß einer alternativen Lösung wird das Einlegeteil vor dem Verpressen werkzeugseitig angeordnet und dann anschließend mit der Formmasse verpresst.

Gemäß einem Aspekt der WC-Sitzgarnitur oder des Urinaldeckels, die oder der gemäß der vorangegangenen Beschreibung ausgebildet ist, sind die Einlegeteile nach dem Verpressen zumindest abschnittsweise überdeckt.

Das erfindungsgemäße Verfahren sieht dementsprechend vor, zum Verpressen eines Sitzes und/oder eines Deckels (Deckel einer WC-Sitzgarnitur) zunächst ein Einlegeteil in das Werkzeug oder in die oben genannte Formmasse einzubringen, wobei das letztgenannte Einbringen in die Formmasse innerhalb oder außerhalb des Werkzeuges erfolgen kann. In einem anschließenden Verfahrensschritt erfolgt dann das Verpressen der Einlegeteile mit der Formmasse zum Sitz oder Deckel.

In einer Weiterbildung dieses Verfahrens, ist das Einlegeteil zumindest teilweise von der Kunststoffmatrix überdeckt.

Dieses Einpressen kann beispielsweise derart erfolgen, dass das Einlegeteil von der Formmasse vollflächig überdeckt ist. Auch ein teilweises Überdecken ist möglich.

Bei einem Ausführungsbeispiel der Erfindung sind die Einlegeteile als die Struktur des Sitzes oder des Deckels verstärkende Strukturelemente oder als Funktionsbauteile ausgeführt.

In einer Variante, die nicht Teil der Erfindung ist, können Strukturelemente in Form von beispielsweise Inlays aus Metall, Kunststoff oder natürlichen Materialien vorhanden sein. Als Strukturelemente gelten auch Lochbleche, strukturierte Bleche, Honeycombs (Kunststoffwabenstrukturen), Gewebe, Profilkörper, Vliese oder dergleichen.

Die Funktionsbauteile können Sensoren, Chips, Sender, Empfänger, Zuleitungen, Befestigungselemente wie beispielsweise Gewindebuchsen, eine Sitzheizung, Gelenkteile oder dergleichen sein.

Die Matrix ist vorzugsweise ein duroplastisches Harz wie beispielsweise ein UF-(Urea-Formaldehyd) oder ein UP- (ungesättigtes Polyester)Harz oder ein Thermoplast wie beispielsweise ein LFT (Langfaserthermoplast) sein. Letztere werden im Legeverfahren verarbeitet.

Bei einer Variante der Erfindung sind die Befestigungselemente zum Befestigen von auswechselbaren Zusatzelementen wie beispielsweise einer Sitzheizung, einer hochfunktionalen Oberfläche, eines Sitzpolsters, Sensoren, medizinischer Einsätze, verbrauchbarer Einsätze oder dergleichen ausgelegt.

Bei der Erfindung werden der Sitz und der Deckel nach dem SMC- oder dem BMC-Verfahren hergestellt.

Wie vorstehend erläutert, kann das Verpressen derart erfolgen, dass die Einlegeteile zumindest abschnittsweise überdeckt sind.

Bevorzugte Ausführungsbeispiele der Erfindung werden im Folgenden anhand schematischer Zeichnungen näher erläutert. Es zeigen:
Figur 1 und Figur 2 dreidimensionale Darstellungen einer erfindungsgemäßen WC-Sitzgarnitur;
Figur 3 eine Seitenansicht der WC-Sitzgarnitur gemäß den Figuren 1 und 2;
Figur 4 eine Prinzipskizze zur Erläuterung der Herstellung und des Aufbaus eines Ausführungsbeispiels, bei dem Einlegeteile in eine Formmasse eingebracht sind;
Figur 5 eine Variante, bei der Einlegeteile zusätzlich oder alternativ werkzeugseitig angeordnet sind und
Figur 6 eine Prinzipdarstellung eines WC-Sitzes, der in einer Anordnung gemäß Figur 5 hergestellt ist.

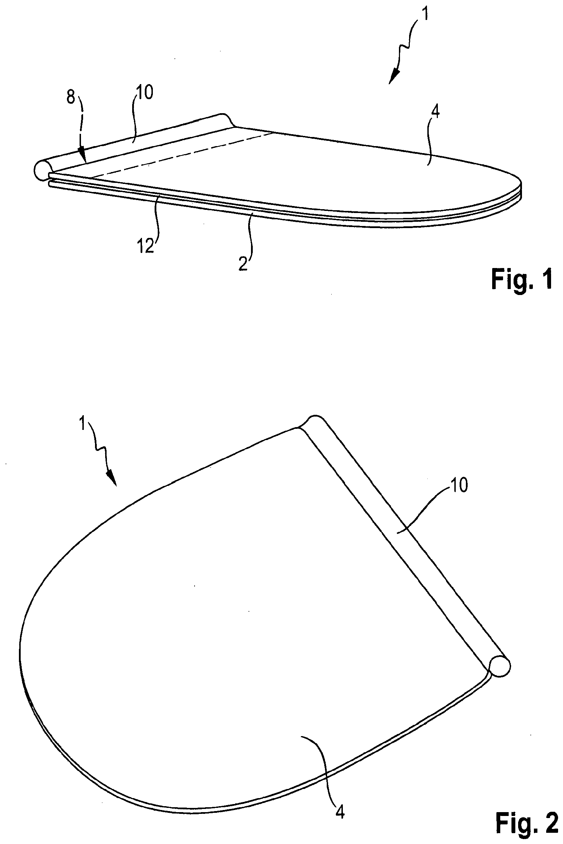

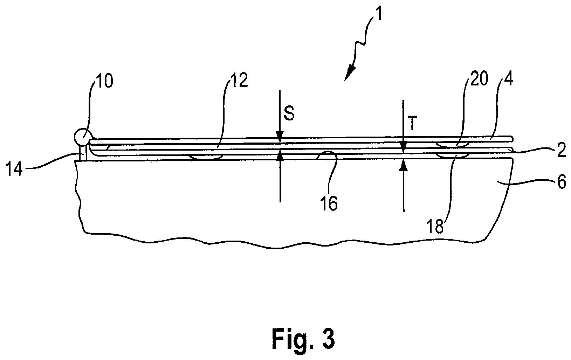

Figur 1 zeigt eine schematische Darstellung einer erfindungsgemäßen WC-Sitzgarnitur 1 im Flach- oder Flat-Design. Diese WC-Sitzgarnituranordnung 1 hat einen WC-Sitz 2, der im geschlossenen Zustand von einem WC-Deckel 4 überdeckt ist. Wie im Folgenden anhand Figur 3 erläutert, wird die WC-Sitzgarnitur 1 auf eine Keramik 6 aufgesetzt. Der WC-Sitz 2 und der WC-Deckel 4 sind über eine WC-Sitzgelenkanordnung 8 miteinander verbunden, diese Sitzgelenkanordnung 8 ist beim dargestellten Ausführungsbeispiel in einem Gelenkgehäuse 10 der WC-Sitzgarnitur 1 aufgenommen.

Abgesehen von der etwa zylinderförmigen Ausgestaltung des Gelenkgehäuses 10 ist die WC-Sitzgarnitur plattenförmig ausgeführt. Dem entsprechend haben sowohl der WC-Sitz 2 als auch der WC-Deckel 4 eine im weitesten Sinn plattenförmige Struktur, so dass sich im geschlossenen Zustand ein umlaufender Sichtspalt 12 mit einer vergleichsweise geringen Spaltweite von etwa 3 bis 7 mm ergibt. Dieses sehr "cleane" Design zeichnet sich durch eine sehr ansprechende Anmutung mit klaren, glatten Konturen aus. Beim dargestellten Ausführungsbeispiel sind die vom Gelenkgehäuse 10 entfernten Endabschnitte von WC-Deckel 4 und WC-Sitz 2 verrundet. Prinzipiell können diese Bereiche auch mit einer geraden Vorderkante ausgeführt sein, so dass die Deckelstruktur in etwa derjenigen einer rechteckförmigen Platte entspricht.

Figur 2 zeigt eine Draufsicht auf die WC-Sitzgarnitur gemäß Figur 1. In dieser Darstellung erkennt man den WC-Deckel 4 und das an die WC-Sitzgarnitur 1 angesetzte Gelenkgehäuse 10, das im Prinzip durch WC-Sitz 2 und WC-Deckel 4 gebildet ist.

Figur 3 zeigt eine Seitenansicht der WC-Sitzgarnitur 1 gemäß den Figuren 1 und 2 in dem auf die Keramik 6 aufgesetzten und geschlossenen Zustand. Bei dem dargestellten Ausführungsbeispiel sind in der Keramik zwei Pins (nur ein Pin 14 sichtbar) eingebettet, deren Endabschnitte nach oben hin auskragen und auf die die WC-Sitzgarnitur 1 in an sich bekannter Weise aufgesetzt wird. Wie im eingangs beschriebenen Stand der Technik erläutert, ist die Sitzgelenkanordnung 8 mit Rotationsdämpfern versehen, die die Absenkbewegung von WC-Sitz 2 und WC-Deckel 4 dämpfen. Wie vorstehend erläutert, haben WC-Sitz 2 und WC-Deckel 4 eine im wesentlichen plattenförmige Struktur und verlaufen im geschlossenen Zustand im Parallelabstand zueinander, so dass sich ein durchgehender Sichtspalt 12 mit der Spaltweite S von weniger als 10 mm, vorzugsweise von etwa 3 mm bis 7 mm ergibt. Ein entsprechender Spalt oder Sichtspalt T bildet sich dann zwischen dem WC-Sitz 2 und einer Auflagefläche 16 der Keramik aus. Die Spaltweiten S und T sind im Wesentlichen gleich groß gewählt, so dass sich eine sehr homogene Lagenstruktur ausbildet. Die Beabstandung von WC-Sitz 2 zur Keramik 6 und vom WC-Deckel 4 zum WC-Sitz 2 wird jeweils durch Pads 18, 20 gewährleistet, die mit dem WC-Deckel 4 bzw. WC-Sitz 18 verbunden sind und aus einem vergleichsweise elastischen Kunststoff hergestellt sind, so dass ein Schlaggeräusch beim Schließen verhindert ist.

Ein derartiges Spaltmaß S, T lässt sich nicht mit herkömmlichen Materialien gewährleisten. Dem entsprechend ist die erfindungsgemäße WC-Sitzgarnitur aus einem SMC- oder BMC-Material hergestellt. Ein derartiges Material besteht, wie oben ausgeführt, aus einer Fasermatte, einem Faservlies oder dergleichen (SMC) oder vergleichsweise kurzen Fasern (BMC), die von einer Kunststoffmatrix (Polyester/Vinylesterharz) umgeben sind und in einer entsprechenden Pressform verpresst sind.

Erfindungsgemäß sind sowohl der WC-Sitz 4 als auch der WC-Deckel 2 als SMC- oder BMC-Bauteile ausgeführt.

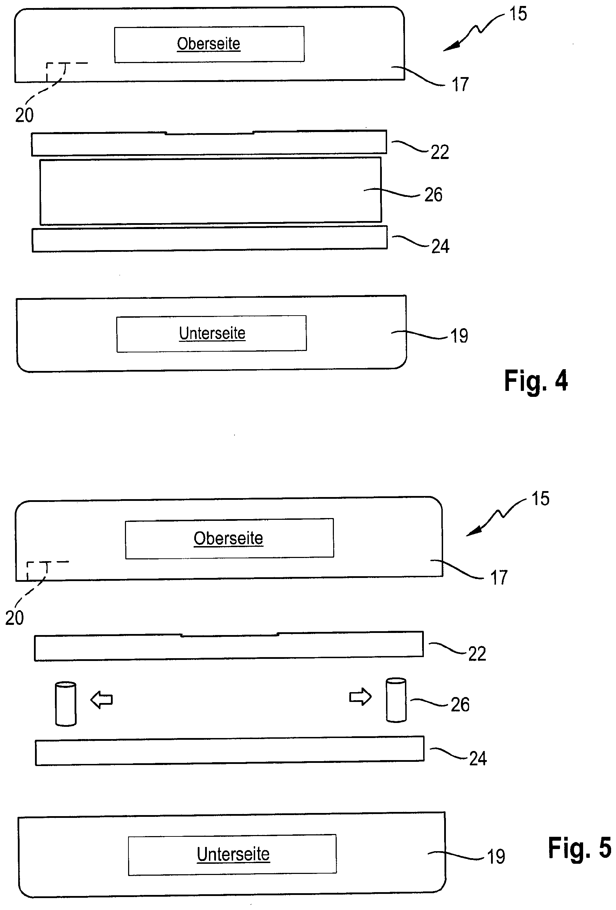

Figur 4 zeigt eine stark schematisierte Darstellung zur Verdeutlichung eines Herstellungsprozesses gemäß der Erfindung. Es sei angenommen, dass ein Sitz 2 oder ein Deckel 4 in einer Presse zur Herstellung von SMC/BMC-Bauteilen hergestellt wird. Eine derartige Presse hat üblicherweise ein Presswerkzeug, im Folgenden Werkzeug 15 genannt, das aus einem Werkzeugoberteil 17 und einem Werkzeugunterteil 19 besteht, die gemeinsam eine Kavität 21 begrenzen. Mittels der Presse kann das Werkzeug 15 zugefahren und mit hoher Haltekraft zugehalten werden, so dass die darin aufgenommene Formmasse mit der Kunstharzmatrix bei erhöhter Temperatur mit großer Kraft verpresst wird. Beispielsweise beim SMC-Verfahren werden die vorstehend beschriebenen SMC-Halbzeugzuschnitte schichtweise oder als Schichtaufbau vorgefertigte Zuschnitte in das geöffnete Werkzeug 15 eingelegt. Dieser Schichtaufbau ist in der Darstellung gemäß Figur 4 mit den Bezugszeichen 22, 24 angedeutet. Selbstverständlich ist dieser SMC-Schichtaufbau nicht auf die beiden SMC-Schichten/-Blätter 22, 24 gemäß Figur 4 begrenzt sondern kann aus einer Vielzahl von unterschiedlichen Schichten aus Faserverbundmaterial/Vlies oder dergleichen bestehen. Erfindungsgemäß wird in diesen, mit der Harzmatrix versehenen SMC-Schichtaufbau 22, 24 zumindest ein Einlegeteil (Inlay) 26 eingebracht. Dieses Einbringen des Einlegeteils 26 kann beispielsweise bereits beim Herstellen des SMC-Halbzeugzuschnittes erfolgen. Alternativ kann das zumindest eine Einlegeteil 26 auch beim Erstellen des SMC-Schichtaufbaus im Werkzeug 15 in der vorgegebenen Position fixiert werden. Diese Fixierung kann beispielsweise durch vorbestimmte Aufnahmen der SMC-Schichten 22, 24, ... erfolgen.

Wie vorstehend ausgeführt, können derartige Einlegeteile 26 nicht erfindungsgemäß beispielsweise Strukturelemente zur Verstärkung des strukturellen Aufbaus eines Sitzes 2 oder eines Deckels 4 sein. Dabei können beispielsweise so genannte Honeycombs, Geflechte, strukturierte Bleche, Lochbleche, sonstige Profilkörper oder dergleichen vorgesehen sein, die in geeigneter Weise in den Sitz oder den Deckel integriert sind.

In einer Ausführungsform der Erfindung können derartige Einlegeteile 26 auch funktionale Elemente sein. So können beispielsweise Sensoren, Chips, Sender, Empfänger, elektrische Zuleitungen, Signalübertragungskabel, Antennen oder eine Sitzheizung in den SMC-Schichtaufbau integriert sein, wobei die eigentliche mechanische Verbindung dann durch den genannten Pressvorgang erfolgt.

Nicht erfindungsgemäß ist es auch möglich, den SMC-Schichtaufbau mit einem geeigneten Kern, beispielsweise einen Holzkern oder einen Urea-Kern zu versehen, der dann von dem SMC-Schichtaufbau umgeben oder Teil dieses Schichtaufbaus ist.

Bei der Herstellung des Sitzes und des Deckels mittels des BMC-Verfahrens werden entsprechend die genannten Einlegeteile in die knetfähige Formmasse eingebracht. Dies erfolgt dann vorzugsweise innerhalb des Werkzeuges.

Bei dem anhand Figur 4 erläuterten Verfahren sind die Einlegeteile 26 nach dem Verpressen vorzugsweise von dem eigentlichen Kernmaterial (ausgehärtete Formmasse) überdeckt, wobei diese Oberflächenschicht durch geeignete Einstellung der Kunststoffmatrix, beispielsweise durch Zugabe von Füllstoffen oder geeigneten Harzen und durch geeignete Wahl des Pressdrucks und der Werkzeugtemperatur äußerst hochwertig ist, so dass eine zusätzliche Lackierung/Oberflächenbehandlung nicht mehr erforderlich ist.

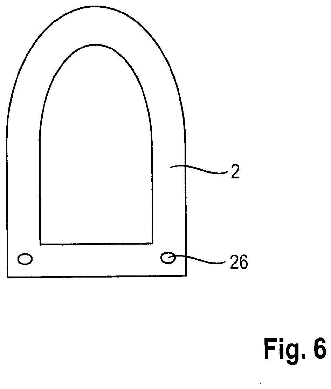

Bei einigen Anwendungen ist es erforderlich, derartige Einlegeteile 26 an der Oberfläche des Sitzes bzw. des Deckels vorzusehen. Bei einem derartigen Ausführungsbeispiel werden dann die Einlegeteile 26 gemäß den Figuren 5 und 6, beispielsweise Gewindehülsen, Clipanbindungen, etc. werkzeugseitig fixiert. Anschließend wird die Formmasse (SMC-Schichtaufbau/BMC-Formmasse) mit Harzmatrix in die Kavität eingebracht und dann die Einlegeteile 17 bei geschlossenem Presswerkzeug 15 mit der Formmasse bzw. dem SMC-Schichtaufbau verpresst, wobei dann die Einlegeteile 26 exakt lagepositioniert in den SMC-/BMC-Strukturaufbau integriert sind.

Durch die Anordnung derartiger Einlegeteile 26, beispielsweise von Gewindebuchsen derart, dass ihre Gewindeabschnitte von außen her zugänglich sind (siehe Figur 6), wird es ermöglicht, sonstige Funktionselemente, wie beispielsweise eine extern aufgebrachte Sitzheizung, eine hochfunktionale Oberfläche, ein Sitzpolster, Sensoren, auswechselbare medizinische Einsätze, verbrauchbare Einsätze (Hygiene) oder dergleichen auf einfache Weise am Sitz oder am Deckel zu befestigen. Dabei kann diese Befestigung sitzseitig oder auch von der Unterseite (von der Keramik her) erfolgen.

Das erfindungsgemäße Konzept ermöglicht es somit, auf einfache Weise den Sitz sehr flexibel mit Zusatzfunktionen auszustatten. Dabei ist die Herstellung deutlich einfacher als bei den herkömmlichen Lösungen, bei denen derartige Strukturen durch dem Pressen nachfolgende Bearbeitung an- oder eingebracht werden müssen.

Die bei einem derartigen Verfahren eingesetzten Harze, beispielsweise UP-Harze bieten neben dem Vorteil der geringen Wasseraufnahme auch deutliche Vorteile im Hinblick auf das Einbringen von Einlegeteilen 26, da das Material keine oder nur in geringem Umfang Spannungsrisse ausbilden. Es ist deshalb möglich, mit Elementen, zum Beispiel aus Metall, zu arbeiten, die direkt in das Werkzeug eingelegt und mitverpresst werden. Die gleiche Vorgehensweise ist - wie erläutert - bei sonstigen Inserts, Gewindebuchsen und anderen Funktionsteilen möglich.

Beim SMC-Verfahren ist es möglich, die Einlegeteile direkt oder außerhalb des Werkzeuges, beispielsweise in der Vorbereitung eines Massekuchens vorzukonfektionieren. Dieser Massekuchen (SMC-Halbzeug) ist dementsprechend im Hinblick auf den Einsatzzweck optimiert.

In dem Fall, in dem Hohlkörper in die Struktur eingepresst werden, können diese funktionelle Bauelemente wie beispielsweise Sensoren, Chips, Sender oder Empfänger aufnehmen, so dass diese nicht direkt in Kontakt mit dem SMC-Schichtaufbau bzw. der Formmasse kommen. Derartige Funktionen können beispielsweise eine Gewichtsmessung, eine Massage, die Messung von medizinischen Kennzahlen oder dergleichen sein. Wie vorstehend erläutert, kann auch eine Sitzheizung direkt in den Sitz eingepresst werden, so dass kein zusätzlicher Bearbeitungsvorgang erforderlich ist.

Die Verwendung von Honeycomb- und/oder Sandwich-Konstruktionen ermöglicht es, auch sehr dicke Sitze/Deckel mit geringem Gewicht aufzubringen.

Die Herstellung eines Urinal-Deckels erfolgt entsprechend den vorstehenden Erläuterungen.

Bei dem vorbeschriebenen Ausführungsbeispiel sind - wie erläutert - der WC-Sitz 2 und der WC-Deckel 4 plattenförmig ohne Aufwölbung oder Wölbung ausgeführt. Nicht erfindungsgemäß ist es auch möglich, beide Bauelemente mit einer geringen Aufwölbung oder Wölbung auszuführen - die erfindungsgemäße plattenförmige Ausgestaltung wird jedoch bevorzugt. Ebenso möglich ist es, wie in Figur 1 gestrichelt angedeutet, die WC-Sitzanordnung im gelenkseitigen Bereich etwas nach oben hin (Ansicht nach Figur 1) anzuwinkeln, um Raum für die WC-Sitzgelenkanordnung 8 zu schaffen. Bei einer derartigen Geometrie würde dann das Gelenkgehäuse 10 von dem angewinkelten Teil überdeckt sein, so dass eine noch glattere Anmutung als bei dem in den Figuren 1 bis 3 dargestellten Ausführungsbeispiel erzielt wird.

Offenbart ist eine WC-Sitzgarnitur, bei der ein WC-Sitz und ein WC-Deckel, nach dem SMC- oder BMC-Verfahren hergestellt sind. Offenbart sind des Weiteren eine WC-Sitzgarnitur und ein Verfahren zum Herstellen einer WC-Sitzgarnitur, bei der beim Verpressen Einlegeteile in eine faserverstärkte Kunststoffmatrix eingebracht sind.

### Bezugszeichenliste:

- 1: WC-Sitzgarnitur
- 2: WC-Sitz
- 4: WC-Deckel
- 6: Keramik
- 8: WC-Sitzgelenkanordnung
- 10: Gelenkgehäuse
- 12: Sichtspalt
- 14: Pin
- 15: Presswerkzeug/Werkzeug
- 16: Auflagefläche
- 17: Werkzeugoberteil
- 18: Pad
- 19: Werkzeugunterteil
- 20: Pad
- 21: Kavität
- 22: SMC-Schicht/-Blatt
- 24: SMC-Schicht/-Blatt
- 26: Einlegeteil

## Patentansprüche

1. WC-Sitzgarnitur mit einem WC-Sitz (2) und einem WC-Deckel (4), die über eine WC-Sitzgelenkanordnung (8) miteinander verbunden sind, wobei sowohl der WC-Sitz (2) als auch der WC-Deckel (4) eine plattenförmige Struktur aufweisen, wobei der WC-Sitz (2) und der WC-Deckel (4) im aufeinanderliegenden Zustand einen umlaufenden Sichtspalt (12) von weniger als 10 mm, vorzugsweise zwischen 3 und 7 mm aufweisen und wobei der WC-Sitz (2) und der Deckel (4) nach einem SMC- oder BMC-Verfahren hergestellt sind, wobei der WC-Deckel und der WC-Sitz (2) aus faserverstärktem Kunststoff, bestehend aus einer duroplastischen Harzmatrix mit Verstärkungsfasern, besteht und wobei zumindest der WC-Deckel (4) und der WC-Sitz (2) aus, vorzugsweise nahezu zellulosefreiem, SMC- oder BMC-Vollmaterial besteht.

2. WC-Sitzgarnitur nach Patentanspruch 1, wobei Befestigungselemente zum Befestigen von auswechselbaren Zusatzelementen, wie beispielsweise einer Sitzheizung, einer hochfunktionalen Oberfläche, eines Sitzpolsters, eines Sensors, eines medizinischen Einsatzes, eines verbrauchbaren Einsatzes oder dergleichen dienen, wobei die Befestigungselemente im WC-Sitz und/oder im WC-Deckel als Einlegeteile verpresst oder umspritzt sind.

3. Verfahren zur Herstellung einer WC-Sitzgarnitur (1), nach einem der vorhergehenden Ansprüche, aufweisend die Schritte:
- Verpressen einer mit einem SMC- Halbzeug versetzten Kunstharzmatrix zu wenigstens einem Abschnitt (2, 4) der WC-Sitzgarnitur (1), oder einen Schritt
- Spritzen oder Spritzgießen einer mit einem BMC- Halbzeug versetzten Kunstharzmatrix zu wenigstens einem Abschnitt (2, 4) der WC-Sitzgarnitur (1), wobei der wenigstens eine Abschnitt der WC-Sitz (2) oder der Deckel (4) ist, wobei der andere Abschnitt der WC-Sitzgarnitur mit demselben Verfahren hergestellt wird;
und wobei der WC-Sitz und der WC-Deckel aus SMC- Vollmaterial oder BMC-Vollmaterial gepresst und / oder gespritzt wird.

4. Verfahren nach Patentanspruch 3, mit den Schritten:
- Einbringen von Einlegeteilen (26) in das Werkzeug (15) oder in eine faserverstärkte Kunststoffmatrix außerhalb oder innerhalb des Werkzeugs (15) und
- Verpressen der Einlegeteile (26) mit der faserverstärkten Kunststoffmatrix zum WC-Sitz oder zum WC-Deckel.

## Claims

1. A toilet seat set including a toilet seat (2) and a toilet seat lid (4) that are joined to each other via a toilet seat joint assembly (8), both the toilet seat (2) and the toilet lid (4) having a plate-shaped structure, wherein both the toilet seat (2) and the toilet lid (4) in a state in which they lie on top of each other, have a circumferential gap (12) of less than 10 mm, preferably between 3 and 7 mm, and wherein the toilet seat (2) and the lid (4) are manufactured according to an SMC or BMC method, the toilet lid and the toilet seat (2) consisting of fiber-reinforced resin consisting of a duroplast resin matrix with reinforcement fibers and at least the toilet lid (4) and the toilet seat (2) consisting of preferably cellulose-free SMC or BMC solid material.

2. The toilet seat set according to claim 1, wherein
fastening elements are for fastening exchangeable supplementary components such as, for example, a seat heating, a highly functional surface, a seat pad, a sensor, a medicinal insert, a consumable insert, or the like, the fastening elements in the toilet seat and/or toilet lid being compression molded or overmolded.

3. A method for manufacturing a toilet seat set (1) according to any of the preceding claims, comprising the steps of
- compression molding of a resin matrix blended with an SMC semi-finished product to form at least one section (2, 4) of the toilet seat set (1), or a step of
- injecting or injection molding of a resin matrix blended with a BMC semi-finished product to form at least one section (2, 4) of the toilet seat set (1), wherein the at least one section is the toilet seat (2) of the toilet lid (4), wherein the other section of the toilet seat set is manufactured using the same method;
and wherein the toilet seat and the toilet lid are compression molded and / or injection molded from SMC solid material or BMC solid material.

4. The method according to claim 3, comprising the steps of
- inserting inserts (26) in the tool (15) or in a fiber-reinforced resin matrix outside and inside the tool (15) and
- compression molding of the inserts (26) with the fiber-reinforced resin matrix to form a toilet seat or a toilet seat lid.

## Revendications

1. Garniture de siège de WC avec un siège de WC (2) et un couvercle de WC (4) qui sont reliés par le biais d'un agencement d'articulation de siège de WC (8) l'un à l'autre, dans laquelle non seulement le siège de WC (2) mais aussi le couvercle de WC (4) présentent une structure en forme de plaque, dans laquelle le siège de WC (2) et le couvercle de WC (4) présentent dans l'état reposant l'un sur l'autre une fente d'inspection (12) périphérique de moins de 10 mm, de préférence entre 3 et 7 mm et dans laquelle le siège de WC (2) et le couvercle (4) sont fabriqués selon un procédé SMC ou BMC, dans laquelle le couvercle de WC et le siège de WC (2) se composent de matière plastique renforcée de fibres, se composant d'une matrice de résine duroplastique avec des fibres de renforcement et dans laquelle au moins le couvercle de WC (4) et le siège de WC (2), se composent de matériau plein SMC ou BMC de préférence presque sans cellulose.

2. Garniture de siège de WC selon la revendication 1, dans laquelle des éléments de fixation servent à la fixation d'éléments supplémentaires interchangeables comme par exemple un chauffage de siège, une surface hautement fonctionnelle, un rembourrage de siège, un capteur, un insert médical, un insert consommable ou similaire, dans laquelle les éléments de fixation sont compressés ou extrudés dans le siège de WC et/ou dans le couvercle de WC comme pièces d'insertion.

3. Procédé de fabrication d'une garniture de siège de WC (1) selon l'une quelconque des revendications précédentes, présentant les étapes consistant à :
- compresser une matrice de résine synthétique décalée avec un demi-produit SMC en au moins une section (2, 4) de la garniture de siège de WC (1) ou une étape consistant à
- injecter ou mouler par injection une matrice de résine synthétique décalée avec un demi-produit BMC en au moins une section (2, 4) de la garniture de siège de WC (1),
dans lequel l'au moins une section est le siège de WC (2) ou le couvercle (4),
dans lequel l'autre section de la garniture de siège de WC est fabriquée avec le même procédé ;
et dans lequel le siège de WC et le couvercle de WC sont pressés et/ou injectés en matériau plein SMC ou matériau plein BMC.

4. Procédé selon la revendication 3, avec les étapes consistant à :
- introduire des pièces d'insertion (26) dans l'outil (15) ou dans une matrice en matière plastique renforcée par des fibres en dehors ou dans l'outil (15) et
- compresser les pièces d'insertion (26) avec la matrice en matière plastique renforcée par des fibres en siège de WC ou en couvercle de WC.
